# EUROPEAN PATENT APPLICATION

(11) **EP 3 561 258 A1**
(43) Date of publication of application: **30.10.2019**
(21) Application number: 19169655.8
(22) Date of filing: 16.04.2019
(51) Int. Cl.: F02B 37/02, F02B 37/22, F01D 17/14, F16K 5/02

(54) **TURBOCHARGER WITH TWIN-SCROLL TURBINE HOUSING, AND CROSS-SCROLL COMMUNICATION CONTROL VALVE OPERABLE TO SELECTIVELY ALLOW OR PREVENT CROSS-TALK BETWEEN SCROLLS**

(30) Priority: 25.04.2018 US 201815963013
(71) Applicant: Garrett Transportation I Inc., Torrance, CA 90504 (US)
(72) Inventor: Bontemps, Nathaniel, Torrance, California 90504 (US); Ladonnet, Michael, Torrance, California 90504 (US); Lombard, Alain, Torrance, California 90504 (US); Palag, Nandor, Torrance, California 90504 (US); Jeckel, Denis, Torrance, California 90504 (US); Pohorelsky, Ludek, Torrance, California 90504 (US); Arnold, Philippe, Torrance, California 90504 (US); Bas, Alain, Torrance, California 90504 (US)
(74) Representative: LKGlobal UK Ltd.

(57) **Abstract**

A turbocharger having a divided turbine housing scroll includes separate first and second exhaust gas conduits for feeding separate streams of exhaust gas to two separate scrolls in the turbine housing. A cross-scroll communication control valve in the turbine housing is operable to selectively allow or prevent two separate streams of exhaust gas in the turbine housing to fluidly communicate with each other. The valve member rotates about a valve axis that is parallel to a flow axis along with the exhaust gas flows in the exhaust gas conduits. The valve member tapers in the flow direction. In a first position, the valve member has walls that close off a cross-communication opening between the two exhaust gas conduits, thereby isolating the conduits from each other. In a second position, a through-passage of the valve member becomes aligned with the cross-communication opening to allow cross-talk between the two conduits.

## Description

### BACKGROUND OF THE INVENTION

The present disclosure relates to turbochargers in which a turbine of the turbocharger is driven by exhaust gas from a reciprocating engine. The invention relates more particularly to turbine housings that are divided into a plurality of substantially separate sections each fed by a separate exhaust system.

An exhaust gas-driven turbocharger is a device used in conjunction with an internal combustion engine for increasing the power output of the engine by compressing the air that is delivered to the air intake of the engine to be mixed with fuel and burned in the engine. A turbocharger comprises a compressor wheel mounted on one end of a shaft in a compressor housing and a turbine wheel mounted on the other end of the shaft in a turbine housing. Typically, the turbine housing is formed separately from the compressor housing, and there is yet another center housing connected between the turbine and compressor housings for containing bearings for the shaft. The turbine housing defines a generally annular chamber that surrounds the turbine wheel and that receives exhaust gas from an engine. The turbine assembly includes a nozzle that leads from the chamber into the turbine wheel. The exhaust gas flows from the chamber through the nozzle to the turbine wheel and the turbine wheel is driven by the exhaust gas. The turbine thus extracts power from the exhaust gas and drives the compressor. The compressor receives ambient air through an inlet of the compressor housing and the air is compressed by the compressor wheel and is then discharged from the housing to the engine air intake.

In multiple-piston reciprocating engines, it is known to design the exhaust system in such a manner as to take advantage of the pressure pulsation that occurs in the exhaust stream. In particular, it is known to employ what is known as "pulse separation" wherein the cylinders of the engine are divided into a plurality of subgroups, and the pulses from each subgroup of cylinders are substantially isolated from those of the other subgroups by having independent exhaust passages for each subgroup. To take best advantage of pulse separation, it is desired to minimize the communication or "cross talk" between the separate groups of cylinders. Accordingly, in the case of a turbocharged engine, it is advantageous to maintain separate exhaust passages all the way into the turbine of the turbocharger. Thus, the turbine housing into which the exhaust gases are fed is typically divided into a plurality of substantially separate parts.

There are two basic ways in which turbine housings have been divided: (1) meridional division, and (2) sector division. In a meridionally divided turbine housing, the scroll or chamber that surrounds the turbine wheel and into which the exhaust gases are fed is divided into a plurality of passages in the meridional plane such that each passage occupies substantially a full circumference and the passages succeed each other in the axial direction, such as shown in Figure 4 of U.S. Patent No. 4,027,994.

In a sector-divided turbine housing, the generally annular chamber is divided into angular sectors each of which occupies only a part of the circumference such that the passages succeed each other in the circumferential direction, such as shown in Figure 2 of U.S. Patent No. 6,260,358.

The present disclosure relates to turbochargers having turbine housings of either the sector-divided or the meridionally divided type.

### BRIEF SUMMARY OF THE DISCLOSURE

The present disclosure describes embodiments of a turbocharger that is selectively configurable in either a single-scroll or twin-scroll configuration, by either preventing or allowing cross-scroll communication between the two scrolls. The mechanism for switching between these configurations comprises a control valve.

In one embodiment described herein, a turbocharger comprises a compressor wheel mounted within a compressor housing, a turbine housing defining a bore extending along a longitudinal axis and defining a divided volute comprising first and second scrolls for receiving exhaust gas, and a turbine wheel disposed in the turbine housing, the turbine housing further defining a first exhaust gas conduit and a second gas conduit that are separated from each other. The first and second exhaust gas conduits respectively feed exhaust gas into the first and second scrolls. The first exhaust gas conduit has a first entrance section that leads into a first feed section that feeds exhaust gas into the first scroll, and the second exhaust gas conduit has a second entrance section that leads into a second feed section that feeds exhaust gas into the second scroll. The first and second entrance sections converge upon each other with an acute angle therebetween, and the first and second feed sections extend parallel to each other and to a flow axis along which exhaust gas flows through the feed sections.

The turbine housing defines a cross-communication opening connecting the first and second entrance sections to each other. The turbocharger includes a cross-scroll communication control valve comprising a valve member disposed in the cross-communication opening. The valve member tapers along the flow direction, such that it has a shape that may be described as arrowhead-shaped. The valve member is rotatable about a valve axis between a first position and a second position, and the valve axis is parallel to the flow axis. The valve member defines walls that close the cross-communication opening in the first position of the valve member such that the first and second exhaust gas conduits are isolated from each other. The valve member defines a through-passage that establishes fluid communication across the cross-communication opening in the second position of the valve member such that fluid communication occurs between the first and second exhaust gas conduits.

### BRIEF DESCRIPTION OF THE SEVERAL VIEWS OF THE DRAWING(S)

Having thus described the disclosure in general terms, reference will now be made to the accompanying drawings, which are not necessarily drawn to scale, and wherein:
FIG. 1 is an end view, as viewed along the axial direction, of an assembly of a turbocharger, a cross-scroll communication control valve, and an engine exhaust manifold, in accordance with an embodiment of the invention;
FIG. 2 is a cross-sectional view along line 2-2 in FIG. 1, wherein the cross-scroll communication control valve is in a first position that isolates the two separate exhaust gas inlets of the turbine housing from each other;
FIG. 3 is an isometric view of the turbocharger, the cross-scroll communication control valve, and the exhaust manifold of FIG. 1, wherein a portion of the turbine housing and the exhaust manifold are shown in section, with the cross-scroll communication control valve in the first position isolating the two exhaust gas conduits from each other;
FIG. 4 is a sectioned view of the turbocharger along line 4-4 in FIG. 2;
FIG. 5 is a cross-sectional view along line 5-5 in FIG. 4;
FIG. 6 is view similar to that of FIG. 3, but showing the cross-scroll communication control valve in a second position that allows fluid communication between the two exhaust gas inlets of the turbine housing;
FIG. 7 is a cross-sectional view similar to FIG. 4, but with the valve in the second position allowing cross-scroll communication;
FIG. 8 is a cross-sectional view along line 8-8 in FIG. 7;
FIG. 9 is an isometric view of the valve member of the cross-scroll communication control valve, in accordance with an embodiment of the invention;
FIG. 10 is an end view of the valve member, as viewed along the valve axis about which the valve member rotates;
FIG. 11 is a cross-sectional view along line 11-11 in FIG. 10; and
FIG. 12 is a cross-sectional view along line 12-12 in FIG. 10.

### DETAILED DESCRIPTION OF THE DRAWINGS

The present disclosure now will be described more fully hereinafter with reference to the accompanying drawings in which some but not all embodiments of the inventions are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

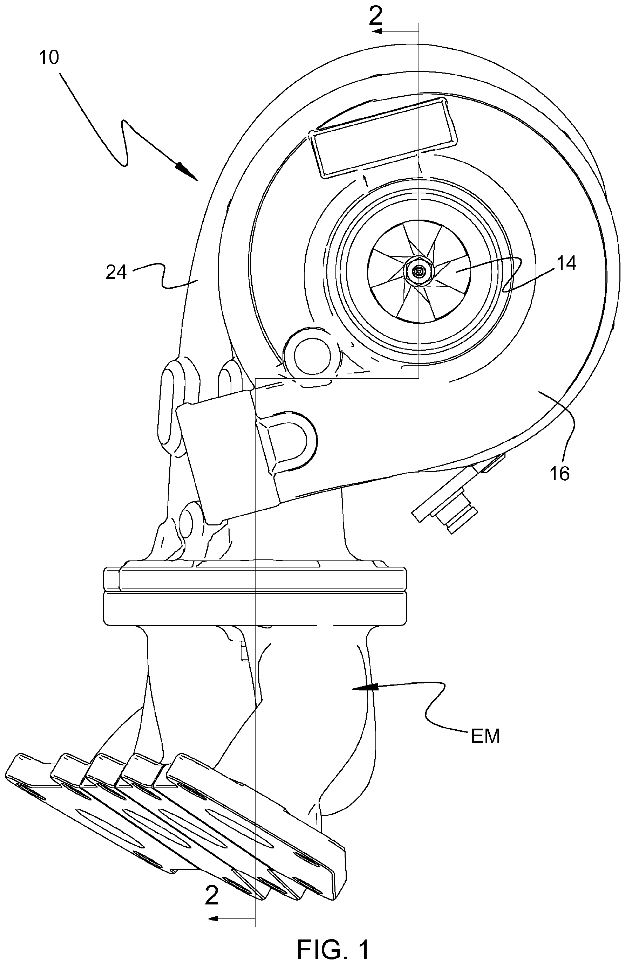

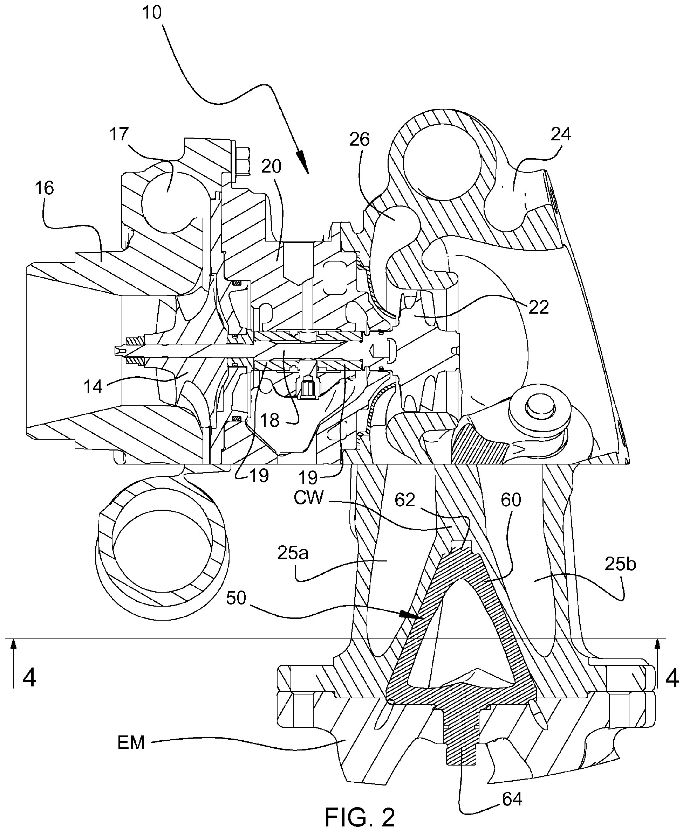

A turbocharger **10** in accordance with one embodiment of the present invention is shown in FIGS. 1 and 2. The turbocharger includes a compressor wheel or impeller **14** disposed in a compressor housing **16** and mounted on one end of a rotatable shaft **18**. The shaft is supported in bearings **19** mounted in a center housing **20** of the turbocharger. The shaft **18** is rotated by a turbine wheel **22** mounted on the other end of the shaft **18** from the compressor wheel, thereby rotatably driving the compressor wheel, which compresses air drawn in through the compressor inlet and delivers the compressed air to a volute **17**, which collects the compressed air for supply to the intake of an internal combustion engine (not shown) for boosting the performance of the engine.

The turbocharger also includes a turbine housing **24** that houses the turbine wheel **22**. As previously noted, in reciprocating internal combustion engines having a plurality of cylinders, it is advantageous to design the exhaust system in such a manner as to take advantage of the pressure pulsation that occurs in the exhaust streams discharged from the cylinders. In particular, it is advantageous to employ what is known as "pulse separation" wherein the cylinders of the engine are divided into a plurality of subgroups, and the pulses from each subgroup of cylinders are substantially isolated from those of the other subgroups by having independent exhaust passages for each subgroup. To take best advantage of pulse separation, it is desired to minimize the communication or "cross talk" between the separate groups of cylinders. In the case of a turbocharged engine, it is advantageous to maintain separate exhaust passages all the way into the turbine of the turbocharger. To this end, the turbine housing typically has a divided scroll, comprising two separate scrolls that respectively receive separate streams of exhaust gas. As previously noted, the scroll can be divided either meridionally or by angular sectors. For the present invention, it is not important which scroll division approach is employed, as the invention is applicable to either one.

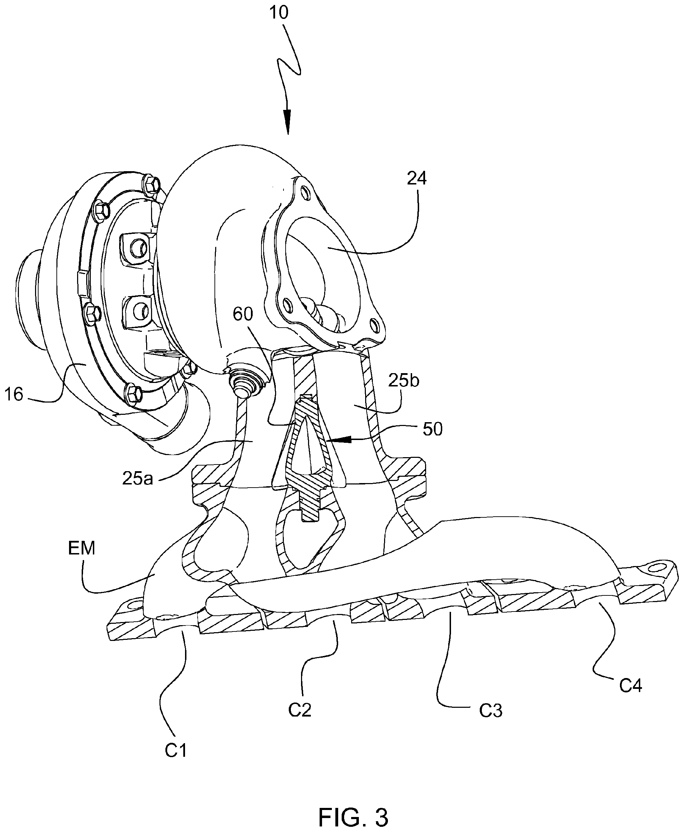

In the illustrated embodiment, the scroll or volute **26** of the turbine housing is sector-divided. Although not visible in the drawings, the scroll **26** is divided into two sectors that extend about 180 degrees in the circumferential direction about the turbine wheel. The two sectors are fed with two separate streams of exhaust gas that come into the turbine housing through a first exhaust gas conduit **25a** and a second exhaust gas conduit **25b** defined by the turbine housing. With reference to FIG. 3, the two exhaust gas conduits receive their respective streams of exhaust gas from the internal combustion engine's exhaust manifold **EM**, which is formed separately from the turbine housing **24** and is affixed to the turbine housing, such as by fasteners such as bolts, screws, or the like. The illustrated embodiment is applicable to a 4-cylinder engine, such that the exhaust manifold defines four separate exhaust pipes **C1**, **C2**, **C3**, and **C4** respectively corresponding to cylinders 1 through 4 of the engine. The exhaust pipes for cylinders 1 and 4 both feed exhaust gas into the first exhaust gas conduit **25a** of the turbine housing, and the exhaust pipes for cylinders 2 and 3 both feed exhaust gas into the second exhaust gas conduit **25b**. Thus, pulse effects of cylinders 1 and 4 are kept isolated from pulse effects of cylinders 2 and 3.

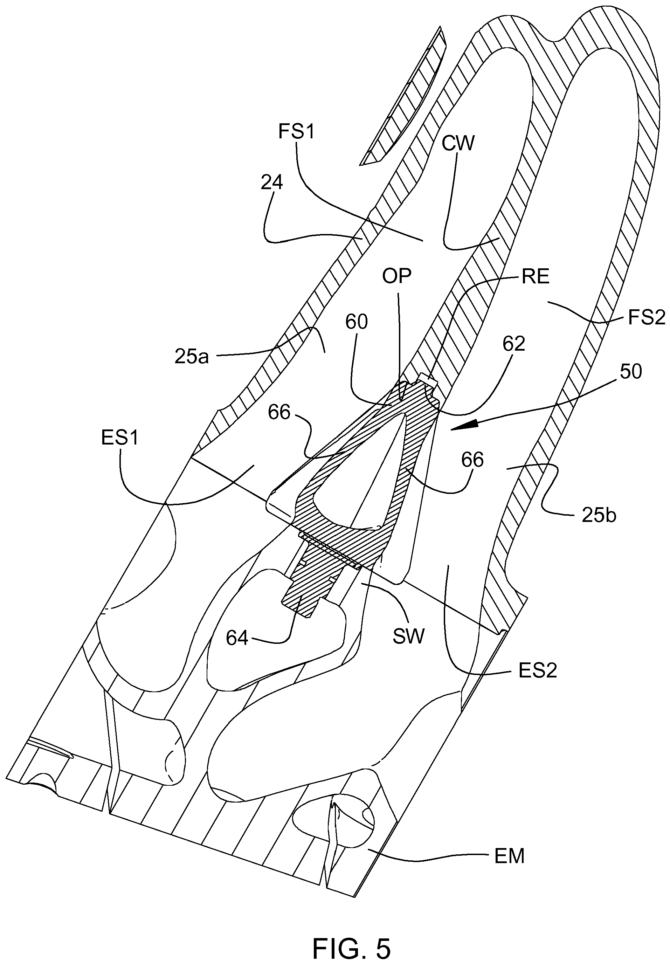

With reference to FIG. 2, the turbocharger includes a cross-scroll communication control valve **50** disposed in the turbine housing **24**, between the engine exhaust manifold **EM** and the scroll 26. FIG. 5 shows the structure and arrangement of the control valve more clearly. The turbine housing defines a center wall **CW** between the exhaust gas conduits **25a** and **25b** for isolating them from each other. However, in the center wall is a cross-communication opening **OP** that connects the exhaust gas conduits **25a** and **25b** to each other. The opening **OP** actually is formed between an end or edge of the center wall **CW** and an opposite support wall **SW** of the exhaust manifold **EM**. The control valve includes a valve member **60** that is disposed in the opening **OP** between the center wall **CW** and the support wall **SW**. The valve member tapers in the flow direction, such that it has an arrowhead shape. The downstream or distal end of the valve member defines a cylindrical portion **62** that is received into a cylindrical recess **RE** defined in the end of the center wall. The upstream or proximal end of the valve member defines a cylindrical shaft **64** that extends through a cylindrical bore in the support wall **SW** such that the end of the shaft protrudes out from the bore and is accessible. A lever arm (not shown) of an actuator is attached to the end of the shaft for rotating the valve member, as further described below.

With reference to FIG. 5, the first exhaust gas conduit **25a** has a first entrance section ES1 that leads into a first feed section **FS1** that feeds exhaust gas into the first scroll. The second exhaust gas conduit **25b** has a second entrance section **ES2** that leads into a second feed section **FS2** that feeds exhaust gas into the second scroll. The first and second entrance sections **ES1** and **ES2** converge upon each other with an acute angle therebetween, while the first and second feed sections **FS1** and **FS2** extend parallel to each other and to the flow direction. It is a feature of the present invention that the valve axis about which the valve member rotates is parallel to the flow direction.

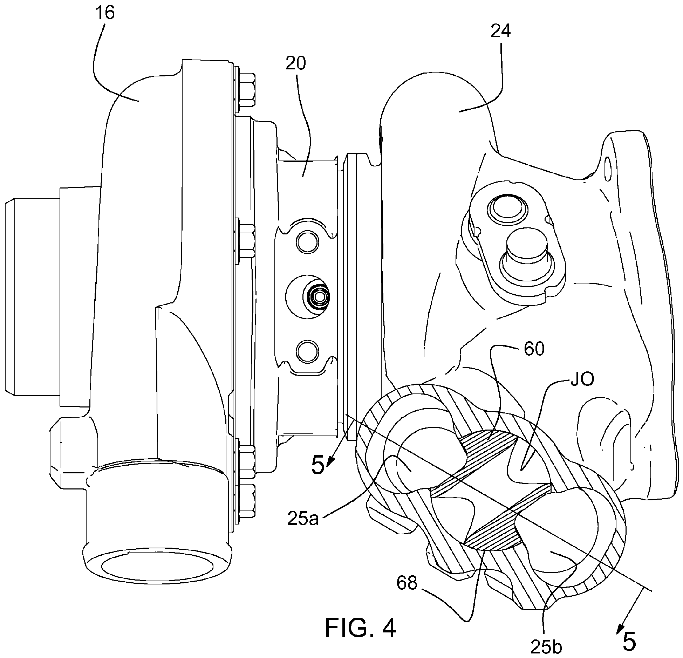

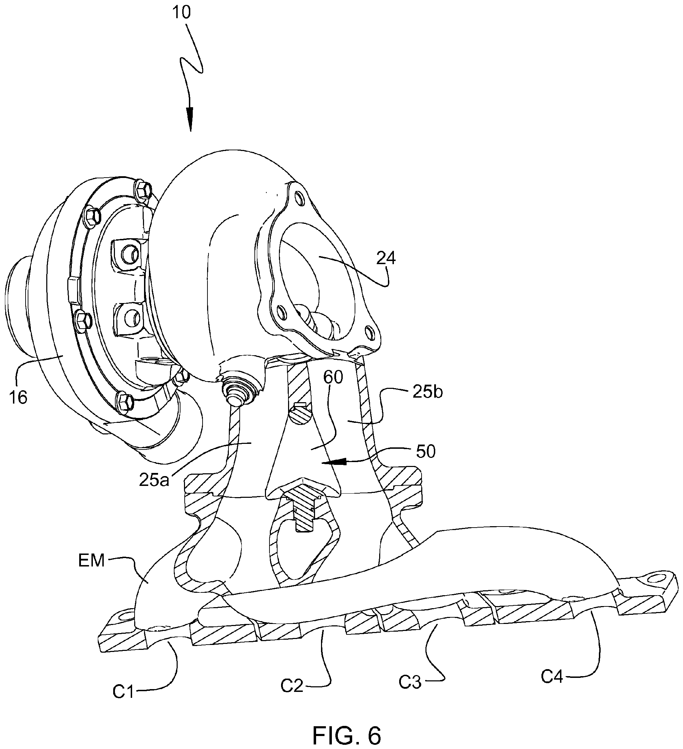

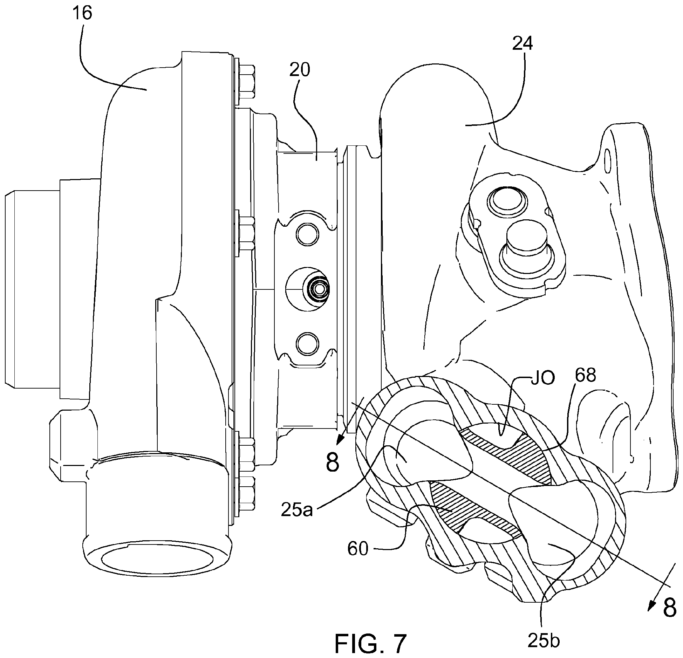

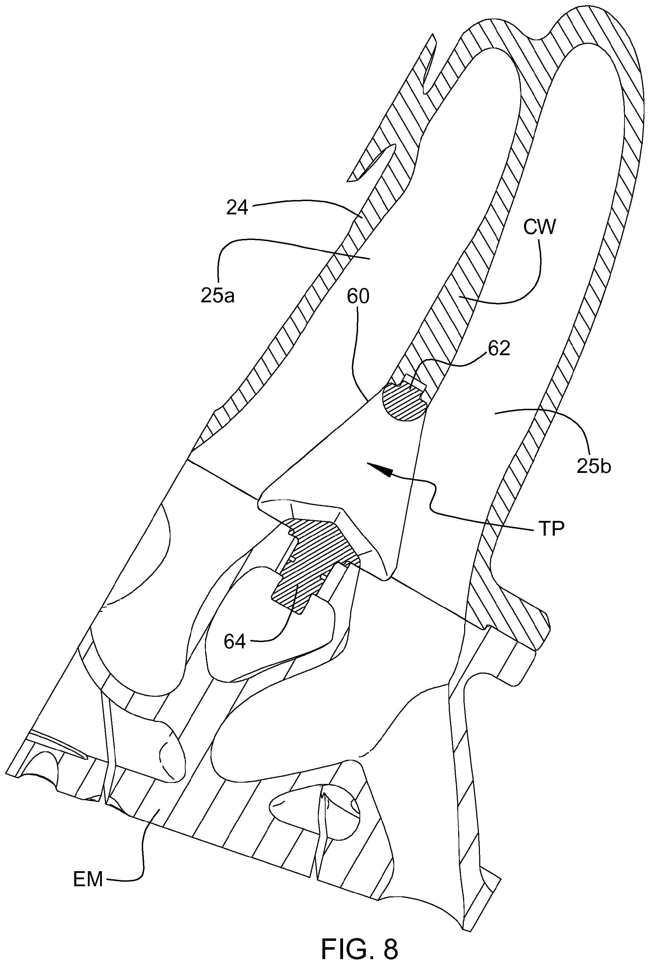

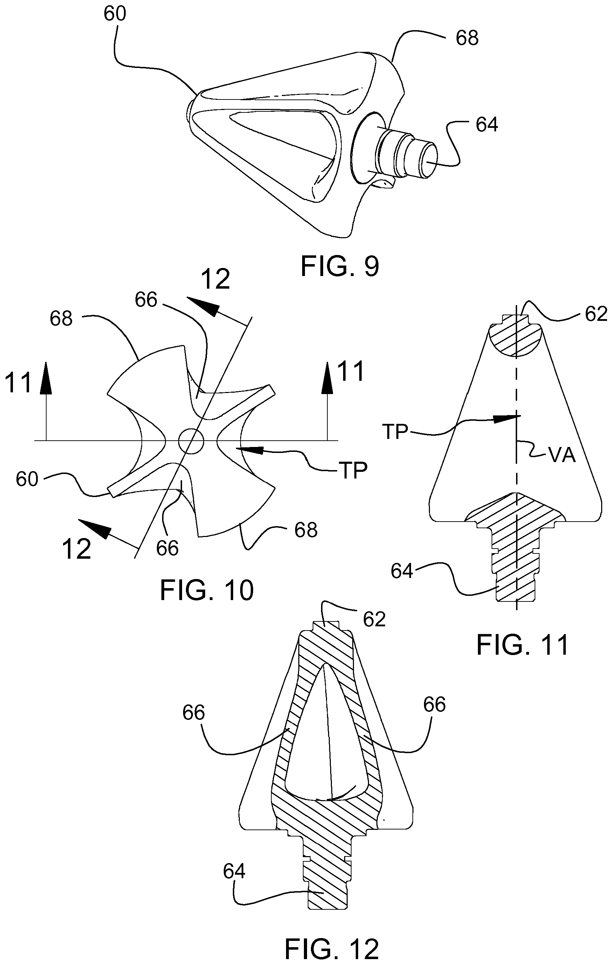

The valve member **60** is rotatable between a first position shown in FIGS. 2, 4, and 5, and a second position shown in FIGS. 6, 7, and 8. FIGS. 9 through 12 show the valve member in isolation, to aid in the description of the structure of the valve member. The valve member includes an opposite pair of solid walls **66** along a first diameter (shown as the section line for FIG. 12 in FIG. 10) from a valve axis **VA** (FIG. 11) about which the valve member rotates. Along a second diameter (shown as the section line for FIG. 11 in FIG. 10), angularly displaced from the first diameter, the valve member defines a through-passage **TP**. The valve member also defines an opposite pair of circular-arc walls **68** along a third diameter angularly displaced from both the first and second diameters, as shown in FIG. 10. The circular-arc walls of the valve member respectively engage a pair of diametrically opposite circular-arc walls **JO** (FIGS. 4 and 7) defined by the turbine housing **24** and forming a journal for the valve member so that the valve member can rotate about the valve axis between the first position and the second position.

Based on the above description of the valve member, it will be understood that when the valve member **60** is in the first position shown in FIGS. 2, 4, and 5, the walls **66** of the valve member close off the opening **OP** in the center wall **CW** so that the first exhaust gas conduit **25a** is isolated from the second exhaust gas conduit **25b**.

When the lever arm of the actuator (not shown) attached to the valve member **60** is rotated to move the valve member to the second position shown in FIGS. 6, 7, and 8, the through-passage **TP** of the valve member becomes aligned with the opening **OP** in the center wall so that cross-communication occurs between the two exhaust gas conduits **25a** and **25b**.

The cross-scroll communication control valve **50** can be placed in either the first position or the second position based on a determination of the current operating condition of the engine and turbocharger. Generally, it is advantageous to preserve isolation between the two separate streams of exhaust gas within the turbine housing at operating conditions in which the energy in the exhaust gas stream is relatively low, i.e., at low engine speeds where exhaust gas flow rates are low. At these low-end operating conditions, the valve member can be placed in the first position to isolate the two exhaust gas conduits **25a** and **25b** from each other. Preserving the pulse-separation effect is beneficial for turbine efficiency at those low-end operating conditions.

At operating conditions having high exhaust gas energy (i.e., high engine speeds where exhaust gas flow rates are high), pulse isolation penalizes engine performance (specifically, maximum power output or specific consumption). Accordingly, at these high-end operating conditions, the valve can be placed in the second position to allow both streams of exhaust gas to use the full volume of the turbine housing scroll, thereby mitigating the engine performance penalty.

The valve **50** can also be placed in any of various partially open positions, intermediate between the closed (first) position and the open (second) position. For example, a plurality of partially open positions at 10% open, 20% open, 30% open, 40% open, 50% open, etc., can be established, in which the valve can be placed. By partially opening the valve to various degrees, the flow rate of exhaust gas to the turbine wheel can be regulated, so that the turbine can be made to perform like a variable-flow turbine.

Many modifications and other embodiments of the inventions set forth herein will come to mind to one skilled in the art to which these inventions pertain having the benefit of the teachings presented in the foregoing descriptions and the associated drawings. The invention is illustrated and described in connection with a radial-inflow turbine, but the invention is not limited to any particular turbine type, and can be used with axial-inflow turbines, mixed radial-axial-inflow turbines, clipped turbine wheels, etc. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A turbocharger comprising:
a compressor wheel mounted within a compressor housing;
a turbine housing defining a bore extending along a longitudinal axis and defining a divided volute comprising first and second scrolls for receiving exhaust gas;
a turbine wheel disposed in the turbine housing;
the turbine housing further defining a first exhaust gas conduit and a second gas conduit that are separated from each other, the first and second exhaust gas conduits respectively feeding exhaust gas into the first and second scrolls, the turbine housing defining a cross-communication opening connecting the first and second exhaust gas conduits to each other; and
a cross-scroll communication control valve comprising a valve member disposed in the cross-communication opening, the valve member tapering in a flow direction along which exhaust gas flows past the valve member, the valve member being rotatable about a valve axis between a first position and a second position, the valve axis being parallel to the flow direction, the valve member defining walls that close the cross-communication opening in the first position of the valve member such that the first and second exhaust gas conduits are isolated from each other, the valve member defining a through-passage that establishes fluid communication across the cross-communication opening in the second position of the valve member such that fluid communication occurs between the first and second exhaust gas conduits.

2. The turbocharger of claim 1, the first exhaust gas conduit having a first entrance section that leads into a first feed section that feeds exhaust gas into the first scroll, the second exhaust gas conduit having a second entrance section that leads into a second feed section that feeds exhaust gas into the second scroll, the first and second entrance sections converging upon each other with an acute angle therebetween, the first and second feed sections extending parallel to each other and to the flow direction.

3. The turbocharger of claim 1, wherein the turbine housing defines a center wall that separates the first and second exhaust gas conduits from each other, the cross-communication opening being defined in the center wall.

4. The turbocharger of claim 3, wherein a distal end of the valve member includes a cylindrical portion, and an edge of the center wall includes a cylindrical recess into which the cylindrical portion of the valve member is received, allowing the valve member to rotate about the valve axis.

5. The turbocharger of claim 3, further comprising an engine exhaust manifold formed separately from the turbine housing and affixed to the turbine housing, the engine exhaust manifold including a support wall disposed opposite from said edge of the center wall having the cylindrical recess, the support wall defining a cylindrical bore therethrough, and wherein a proximal end of the valve member includes a cylindrical shaft, the cylindrical shaft extending through said cylindrical bore and an end of the cylindrical shaft protruding from the cylindrical bore for attachment to a lever arm of an actuator.

6. The turbocharger of claim 1, wherein the valve member is placed in a partially open position, intermediate between the first and second positions, for regulating flow rate of exhaust gas to the turbine wheel.
